# EUROPÄISCHE PATENTSCHRIFT

(11) **EP 2 767 659 B1**
(45) Veröffentlichungstag und Bekanntmachung des Hinweises auf die Patenterteilung: **28.09.2016**
(21) Anmeldenummer: 14153300.0
(22) Anmeldetag: 30.01.2014
(51) Int. Cl.: E05C 9/22

(54) **Höhenverstellbare Rundstangenführung**
Height adjustable round rod guide
Guide à barres rondes réglable en hauteur

(30) Priorität: 14.02.2013 DE 102013101491
(43) Veröffentlichungstag der Anmeldung: 20.08.2014
(73) Patentinhaber: EMKA BESCHLAGTEILE GmbH & Co. KG, 42551 Velbert (DE)
(72) Erfinder: Skopnik, Jörg, 45529 Hattingen (DE)
(74) Vertreter: Müller, Karl-Ernst

(56) Entgegenhaltungen:
- EP-A2- 0 454 077
- WO-A2-2008/125318
- DE-U1- 7 621 270
- US-A1- 2008 179 898

## Beschreibung

Die Erfindung betrifft eine Rundstangenführung zur Montage auf einem behälterseitig angebrachten Stehbolzen mit einem auf dessen Stehbolzenschaft aufsteckbaren und daran festlegbaren Kunststoffkörper, der in seinem Innerem einen Kanal zur Aufnahme des Stehbolzenschaftes und an seinem freien Ende eine Aufnahmeöffnung zum Hindurchführen einer Rundstange aufweist.

Eine Rundstangenführung mit den vorgenannten Merkmalen ist aus der DE 20 2005 015 135 U1 bekannt. Die Rundstangenführung besteht aus einem Kunststoffblock, der mit einem in ihm ausgebildeten Kanal auf einen mit einem Außengewinde versehenen, an einem Behälter bzw. Schaltschrank, vorzugsweise an dessen Tür, angebrachten Stehbolzenschaft aufschraubbar oder aufrastbar ist, wobei in den Kanal des Kunststoffblocks ein die Verbindung mit dem Stehbolzenschaft herstellendes Metallteil eingesetzt sein kann. An seinem freien Ende weist der Kunststoffblock eine Aufnahmeöffnung zum Hindurchführen einer Rundstange auf.

Mit der bekannten Rundstangenführung ist insbesondere noch der Nachteil verbunden, dass die Aufnahmeöffnung für die Rundstange sich bei auf dem Stehbolzenschaft montierter Stangenführung jeweils im gleichen Abstand vom Fuß des Stehbolzenschaftes und damit von dem diesen tragenden Behälterteil befindet, so dass für unterschiedliche Abstände des Verlaufs der Rundstange zur Ebene des die Rundstange tragenden Behälterteils, wie insbesondere des Türblatts, auch unterschiedlich ausgebildete Stangenführungen vorgehalten und eingesetzt werden müssen.

Weiterhin ist aus der WO 2008/125318 A2 eine höheneinstellbare Rundstangenführung zur Montage auf einem behälterseitig angebrachten Stehbolzen bekannt, mit einem auf dessen Stehbolzenschaft aufsteckbaren und daran festlegbaren Kunststoffkörper, der in seinem Inneren einen Kanal zur Aufnahme des Stehbolzenschaftes und an seinem freien Ende eine Aufnahmeöffnung zum Hindurchführen einer Rundstange aufweist.

Der Erfindung liegt daher die Aufgabe zugrunde, eine Rundstangenführung mit den eingangs genannten gattungsgemäßen Merkmalen so auszubilden, dass die einheitliche Rundstangenführung für die Einstellung von zumindest zwei unterschiedlichen Abständen der Aufnahmeöffnung für die Rundstange zum Fuß des Stehbolzenschaftes eingerichtet ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass der Kunststoffkörper zweiteilig mit einem ersten, topfförmigen Basisteil und mit einem zweiten, in das topfförmige Basisteil in wenigstens zwei unterschiedlichen, jeweils um einen vorgegebenen Winkel gegeneinander verdrehten Einsteckpositionen einsteckbaren Einsteckteil ausgebildet ist und an dem Einsteckteil sowohl die Aufnahmeöffnung für die Rundstange als auch der Kanal zur Aufnahme des Stehbolzenschaftes und zum Festlegen der Rundstangenführung daran ausgebildet sind, wobei die in dem Einsteckteil ausgebildete Aufnahmeöffnung bei in das Basisteil eingestecktem Einsteckteil in der ersten Einsteckposition einen anderen Abstand zum Fuß des Stehbolzenschaftes aufweist als in der zweiten Einsteckposition. Somit beruht die Erfindung auf dem Grundprinzip, dass trotz der einheitlichen Ausbildung der beiden Teile der Rundstangeführung durch ein unterschiedliches Ineinanderstecken der Teile jeweils auch eine unterschiedliche Lage der an dem Einsteckteil ausgebildeten Aufnahmeöffnung für die Rundstange im Verhältnis zu dem topfförmigen Basisteil einstellbar ist. Da der Kanal zur Aufnahme des Stehbolzenschaftes und die Mittel zum Festlegen der Rundstangenführung an dem Stehbolzenschaft jeweils an dem Einsteckteil ausgebildet sind, wird über das an dem Stehbolzenschaft festgelegte Einsteckteil auch das dieses in sich aufnehmende topfförmige Basisteil an dem Behälterteil fixiert, so dass an dem Basisteil keine weiteren Gestaltungen zur Festlegung der Rundstangenführung erforderlich sind.

Hierzu kann im Einzelnen vorgesehen sein, dass das erste topfförmige Basisteil an seinem oberen Rand wenigstens zwei einander gegenüberliegende fensterartige Ausschnitte zur in der ersten Einsteckposition formschlüssigen Aufnahme jeweils eines an dem zweiten Einsteckteil ausgebildeten vorstehenden Absatzes aufweist, wobei in der um einen Winkel von 90 Grad zur ersten Einsteckposition verdrehten zweiten Einsteckposition die an dem zweiten Einsteckteil ausgebildeten Absätze auf dem oberen Rand des ersten topfförmigen Basisteils aufsitzen. Im Rahmen einer derartigen Ausbildung der beiden Teile der Rundstangenführung taucht das Einsteckteil in einer ersten Einsteckposition vollständig in das topfförmige Basisteil ein, so dass sich eine niedrige Höhe der Rundstangenführung ergibt. In der um 90 Grad versetzten zweiten Einsteckposition lässt sich das Einsteckteil nur bis zu einer durch die Auflage der an ihm ausgebildeten Absätze auf dem oberen Rand des topfförmigen Basisteils bestimmten Einsteckstellung in das topfförmige Basisteil einstecken, so dass sich eine entsprechend größere Höhe der Stangenführung ergibt.

Zusätzlich kann vorgesehen sein, dass im Inneren des topfförmigen Basisteils nach innen einspringende und formschlüssig mit auf dem äußeren Umfang des Einsteckteils ausgebildeten Ausnehmungen als Verdrehsicherung zusammenwirkende Führungsleisten angeordnet sind.

Die zwischen Einsteckteil und topfförmigem Basisteil verwirklichte Führung sorgt dafür, dass die beiden Einsteckpositionen exakt definiert sind und auch dafür, dass in zusammengestecktem Zustand der beiden Teile der Rundstangenführungen keine Verdrehung der Basisteile gegeneinander möglich ist.

Ein weiteres Problem bei der bekannten Stangenführung stellt die Montage der Stangenführung auf dem Stehbolzen des Behälters dar. Soweit die Stangenführung durch Ausbildung entsprechender Gewindegänge an Stehbolzenschaft und Stangenführung auf den Stehbolzenschaft aufschraubbar ist, ist zunächst eine größere Anzahl von Umdrehungen bei der Montage notwendig, was aufwendig ist. Soweit mit Außengewinde versehene Stehbolzen häufig mit einer Farbbeschichtung versehen sind, kann dadurch das Aufschrauben des Stangenführungskorpus erschwert sein. Dies gilt insbesondere für ein in den Korpus der Stangenführung eingelegtes Metallteil in Form einer Mutter mit daran ausgebildeten Gewindegängen. Soweit auch vorgesehen ist, eine bekannte Stangenführung auf den Stehbolzen aufzurasten, können die Gewindegänge des Stehbolzenschaftes derart mit Farbe belegt sein, dass die Abzugskräfte der Stangenführung von dem Stehbolzen reduziert sind, so dass das Risiko besteht, dass bei einer entsprechenden Belastung der in den Stangenführungen geführten Rundstange in deren Querrichtung sich die Stangenführung von dem Stehbolzen löst.

Somit ist nach einem Ausführungsbeispiel der Erfindung weiterhin vorgesehen, dass in dem Einsteckteil zwei einander gegenüberliegende und in axialer Richtung des vom Boden des Einsteckteils ausgehenden Kanals versetzt zueinander angeordnete halbkreisförmige Wandungsbereiche der den Kanal umschließenden Wandung mit an ein an dem Stehbolzenschaft ausgebildetes Außengewinde angepassten Innengewindegängen versehen sind, wobei ein erster mit Innengewinde versehener unterer Wandungsbereich an die Bodenfläche anschließt und der diesem unteren Wandungsbereich gegenüberliegende Wandungsbereich des Kanals mit einer mit einem Neigungswinkel gegen die Längsachse des Kanals angeordneten Freimachung versehen ist derart, dass eine im Boden des Einsteckteils ausgebildete Öffnung zur Aufnahme des Stehbolzenschaftes schlitzförmig ausgebildet ist und ein Aufstecken der Rundstangenführung auf den Stehbolzenschaft in einer um den Neigungswinkel der Freimachung verkippten Stellung ermöglicht. Hiermit der Vorteil einer einfachen Schnellmontage verbunden, indem die Rundstangenführung in der dafür eingerichteten verkippten Stellung mit ihrer im Boden ausgebildeten schlitzförmigen Öffnung auf den Stehbolzenschaft aufsetzbar ist und nach Kippen der Rundstangenführung in deren Befestigungsstellung mit zueinander fluchtenden Längsachsen von Stehbolzenschaft und Kanal es nur noch einer entsprechend kurz bemessenen Drehung bedarf, um die jeweils ausgebildeten Gewindegänge von Einsteckteil und Stehbolzenschaft in gegenseitigen Eingriff zu bringen.

Um die im Rahmen der Montage noch erforderliche Drehung der Rundstangenführung auf dem Stehbolzenschaft zu erleichtern, kann vorgesehen sein, dass das topfförmige Basisteil auf seinem äußeren Umfang mit einer Riffelung versehen ist.

In der Zeichnung ist ein Ausführungsbeispiel der Erfindung wiedergegeben, welches nachstehend beschrieben ist. Es zeigen:
- Fig. 1a: das topfförmige Basisteil einer zweiteiligen Stangenführung für eine Rundstange in einer Perspektivansicht,
- Fig. 1b: das zugehörige Einsteckteil der Rundstangenführung in einer ersten Perspektivdarstellung,
- Fig. 1c: das Einsteckteil gemäß Figur 1b in einer um 180 Grad verdrehten Rückansicht in einer Figur 1b entsprechenden Perspektivdarstellung,
- Fig. 2: die zusammengesteckte Rundstangenführung in einer beim Aufsetzen auf den Stehbolzen vorgesehene Zwischenmontagestellung in einer Schnittansicht,
- Fig. 3: die Rundstangenführung gemäß Figur 2 in deren Endmontagestellung
- Fig. 4: die Rundstangenführung gemäß Figuren 1a und 1b mit in einer ersten Einsteckposition ineinandergesteckten Teilen in einer Perspektivdarstellung,
- Fig. 5: die Rundstangenführung gemäß Figuren 1a und 1b mit in einer zweiten Einsteckposition ineinandergesteckten Teilen in Perspektivdarstellung.

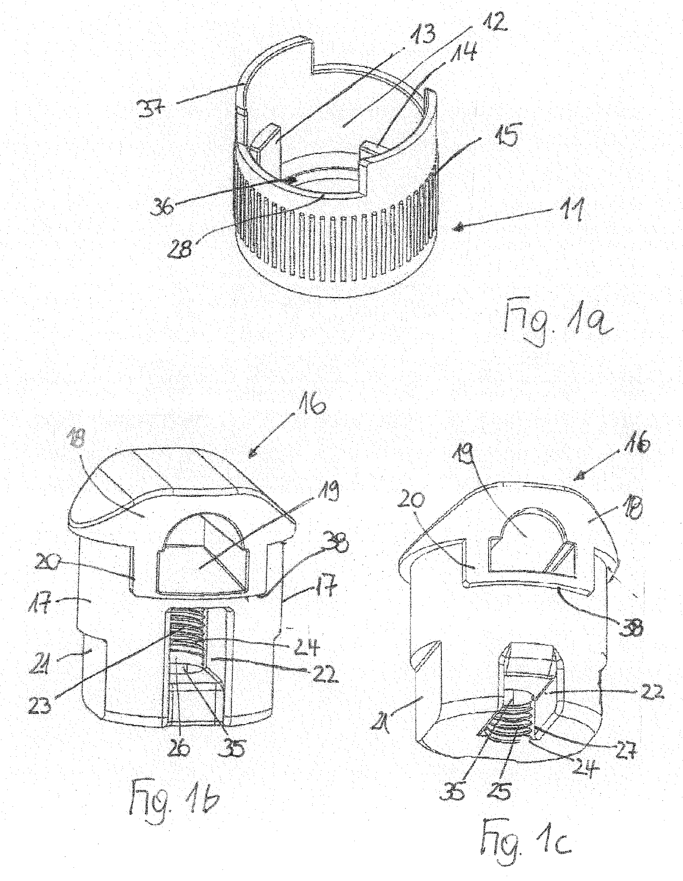

Die erfindungsgemäße Rundstangenführung 10 besteht aus den einerseits in Figur 1a und andererseits in Figuren 1b und 1c dargestellten Einzelteilen, nämlich dem in Figur 1a dargestellten topfförmigen Basisteil 11 und dem in Figuren 1b bzw. 1c dargestellten, in das topfförmige Basisteil 11 einsteckbaren Einsteckteil 16.

Das aus Figur l a ersichtliche topfförmige Basisteil 11 weist einen Innenraum 12 zur Aufnahme des darin einsteckbaren Einsteckteils 16 auf, wobei an der Innenseite der Wandung des topfförmigen Basisteils 11 nach innen in den Innenraum 12 einspringende Führungsleisten 13 und 14 angeordnet sind, die jeweils einander paarweise gegenüberliegen. Dabei weisen die Führungsleisten 13 eine größere Erstreckung über die Höhe des Basisteils 11 als die Führungsleisten 14 auf. In dem oberen Rand 37 der Wandung des topfförmigen Basisteils 11 sind zwei einander gegenüberliegende fensterartige Ausschnitte 36 angeordnet. die jeweils einen oberen Rand 28 ausbilden. Ferner ist das topfförmige Basisteil 11 auf seinem äußeren Umfang mit einer Riffelung 15 versehen, die ein Drehen der Stangenführung 10 bei der Montage erleichtern soll.

Das aus Figuren 1b bzw. 1c ersichtliche Einsteckteil 16 weist einen Einsteckbereich 17 zum Einstecken in den Innenraum 12 des topfförmigen Basisteils 11 auf und an seinem oberen Bereich einen Kopf 18, in welchem eine Aufnahmeöffnung 19 für eine nicht weiter dargestellte, von der Stangenführung 10 zu führende Rundstange ausgebildet ist.

An dem Kopf 18 des Einsteckteils 16 sind sich über einen Teil des Einsteckbereichs 17 erstreckende und über den Umfang des Einsteckbereichs 17 hervorstehende Absätze 20 mit einem unteren Anschlagrand 38 ausgebildet. Die Absätze 20 sind bei dem dargestellten Ausführungsbeispiel derart angeordnet, dass sich die Aufnahmeöffnung 19 für die nicht dargestellte Rundstange teilweise durch die einander gegenüberliegenden Absätze 20 hindurch erstreckt. Die Absätze 20 weisen dabei eine solche Abmessung und Formgebung auf, dass die Absätze 20 mit den im oberen Rand 37 des topfförmigen Basisteils 11 ausgebildeten Ausschnitten 36 korrespondieren.

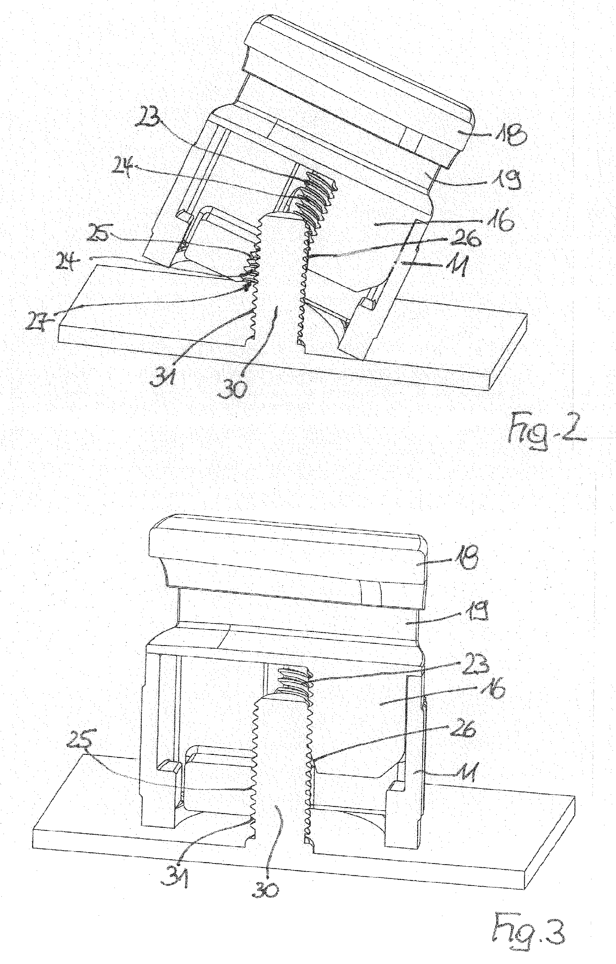

Weiterhin sind am äußeren Umfang des Einsteckbereiches 17 des Einsteckteils 16 einander gegenüberliegende Abflachungen 21 ausgebildet, die als Ausnehmungen zur Aufnahme entweder der Führungsleisten 13 oder der Führungsleisten 14, je nach Einsteckposition des Einsteckteils 16 in das topfförmige Basisteil 11, anzusprechen sind. In einer um jeweils 90 Grad versetzten Anordnung sind weitere nutenartige Einschnitte 22 als entsprechende Ausnehmungen zur Aufnahme der jeweils anderen Führungsleisten 13 bzw. 14 in dem Einsteckbereich 17 des Einsteckteils 16 ausgebildet, die eine zusätzliche, nachstehend beschriebene Funktion bei der Montage der Rundstangenführung 10 auf dem Stehbolzen eines Behältnisses aufweisen (vgl. Figuren 2, 3).

Wie sich aus einer Zusammenschau der Figuren 1b und 1c ergibt, sind in dem Einsteckteil 16 einander gegenüberliegende und in axialer Richtung des vom Boden des Einsteckteils 16 ausgehenden Kanals 35 versetzt zueinander angeordnete halbkreisförmige Wandungsbereiche der den Kanal 35 umschließenden Wandung mit an ein an dem Stehbolzenschaft 30 ausgebildetes Außengewinde 31 angepassten Innengewindegängen 24 versehen.

Wie sich dazu aus Figur 1c ergibt, schließt ein erster mit Innengewinde 24 versehener unterer Wandungsbereich 25 an die Bodenfläche des Einsteckteils 16 an, wobei diesem gegenüberliegend entsprechend der Darstellung in Figur 1b ein in axialer Richtung des Kanals 35 dazu versetzt angeordneter oberer Wandungsbereich 23 ebenfalls mit Innengewinde 24 versehen ist. Die beiden Wandungsbereich 23 und 25 schließen gemeinsam den mit Außengewinde 31 versehenen Stehbolzenschaft 30 ein und bilden somit gemeinsam eine Art im Inneren des Einsteckteils 16 ausgebildete Schraubmutter zum Festlegen des Einsteckteils 16 auf dem Stehbolzenschaft 30.

Zur Erleichterung der Montage ist, wie ergänzend aus den Figuren 2 und 3 zu entnehmen ist, der dem an die Bodenfläche anschließenden unteren Wandungsbereich 25 gegenüberliegende Wandungsbereich 26 des Kanals 35 mit einer mit einem Neigungswinkel von beispielsweise etwa 20 Grad gegen die Längsachse des Kanals 35 angeordneten Freimachung versehen derart, dass die im Boden des Einsteckteil 16 ausgebildete Öffnung 27 zur Aufnahme des Stehbolzenschaftes in etwa schlitzförmig ausgebildet ist. Damit wird ein Aufstecken der Rundstangenführung 10 auf den Stehbolzenschaft 30 in einer um diesen Neigungswinkel von etwa 20 Grad verkippten Stellung ermöglicht, wie in Figur 2 dargestellt ist. In dieser Stellung stehen die jeweiligen Innengewindegänge 24 der beiden Wandungsbereiche 23 und 25 noch nicht in Eingriff mit dem Außengewinde 31 des Stehbolzenschaftes 30, so dass die Stangenführung 10 auf den Stehbolzenschaft aufsteckbar ist. Wie sich aus einer Zusammenschau der Figuren 2 und 3 entnehmen lässt, wird nach dem Aufsetzen der Stangenführung 10 auf den Stehbolzenschaft 30 in der in Figur 2 dargestellten verkippten Stellung die Stangenführung 10 in ihre Funktionsstellung gekippt, in welcher die Bodenfläche der Stangenführung 10 auf der den Stehbolzenschaft 30 tragenden Fläche des zugehörigen Teils des Behältnisses aufliegt. In dieser Stellung bedarf es lediglich einer Drehung der Stangenführung 10 durch Erfassen des topfförmigen Basisteils 11 auf dessen mit der Riffelung 15 versehenen Umfang, um die Stangenführung 10 durch Ausführen einer Umdrehung um etwa eins bis zwei Umdrehungen fest auf den Stehbolzenschaft zu montieren.

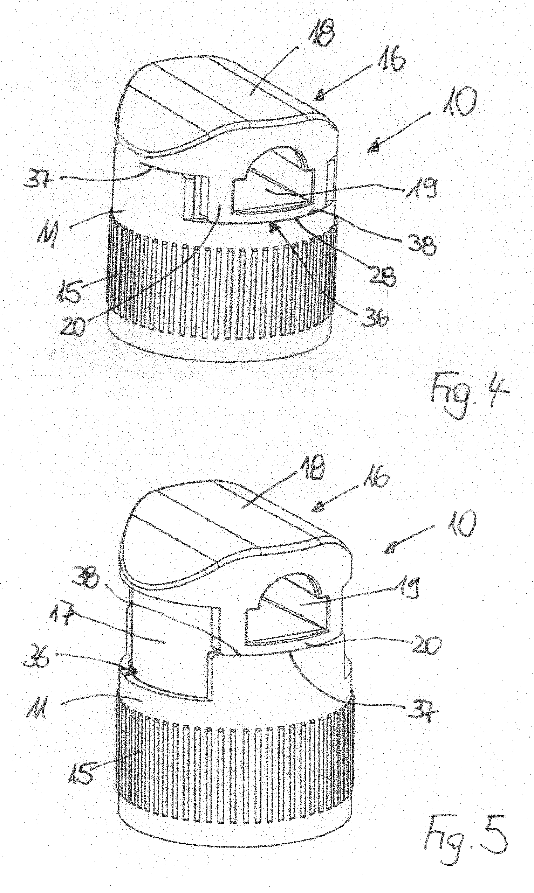

Aus Figuren 4 und 5 lassen sich dabei die beiden unterschiedlichen Einsteckpositionen zur Ausbildung unterschiedlicher Höhen der Stangenführung 10 entnehmen. In der in Figur 4 dargestellten ersten Einsteckposition ist das Einsteckteil 16 in einer Stellung im Verhältnis zu dem topfförmigen Basisteil 11 eingesteckt, in welcher die an dem Einsteckteil 16 ausgebildeten Absätze 20 in die Ausschnitte 36 im oberen Rand 37 des topfförmigen Basisteils 11 eintreten. Entsprechend liegen die an den Absätzen 20 des Einsteckteils 16 ausgebildeten unteren Anschlagränder 38 auf dem oberen Rand 28 der in dem topfförmigen Basisteil 11 ausgebildeten fensterartigen Ausschnitte 36 auf. In dieser ersten Einsteckposition ist die geringere Höhe der Stangenführung 10 eingestellt, weil das Einsteckteil 16 mit seinem Einsteckbereich 17 vollständig in dem Innenraum 12 des topfförmigen Basisteils 11 aufgenommen ist und die Aufnahmeöffnung 19 des Einsteckteils 16 im Bereich der Ausschnitte 36 des topfförmigen Basisteils 11 liegt.

Soweit in Figur 5 die zweite Einsteckposition mit einer entsprechend größeren Höhe der Stangenführung 10 dargestellt ist, ist erkennbar, dass das Einsteckteil 16 mit einer gegenüber der Darstellung in Figur 4 um 90 Grad verdrehten Position in das topfförmige Basisteil 11 eingesteckt ist, wobei der Einsteckbereich 17 des Einsteckteils 16 nur zu einem Teilbereich seiner Erstreckung in dem Innenraum 12 des topfförmigen Basisteils 11 aufgenommen ist und die an dem Einsteckteil 16 ausgebildeten Absätze 20 mit ihren unteren Anschlagrändern 38 auf dem oberen Rand 37 des topfförmigen Basisteils 11 aufsitzen. In diesem Fall liegt die Aufnahmeöffnung 19 für die nicht dargestellte Rundstange außerhalb des topfförmigen Basisteils 11.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Rundstangenführung (10) zur Montage auf einem behälterseitig angebrachten Stehbolzen mit einem auf dessen Stehbolzenschaft (30) aufsteckbaren und daran festlegbaren Kunststoffkörper, der in seinem Inneren einen Kanal (35) zur Aufnahme des Stehbolzenschaftes (30) und an seinem freien Ende eine Aufnahmeöffnung (19) zum Hindurchführen einer Rundstange aufweist, **dadurch gekennzeichnet, dass** der Kunststoffkörper zweiteilig mit einem ersten, topfförmigen Basisteil (11) und mit einem zweiten, in das topfförmige Basisteil (11) in wenigstens zwei unterschiedlichen, jeweils um einen vorgegebenen Winkel gegeneinander verdrehten Einsteckpositionen einsteckbaren Einsteckteil (16) ausgebildet ist und an dem Einsteckteil (16) sowohl die Aufnahmeöffnung (19) für die Rundstange als auch der Kanal (35) zur Aufnahme des Stehbolzenschaftes (30) und zum Festlegen der Rundstangenführung (10) daran ausgebildet sind, wobei die in dem Einsteckteil (16) ausgebildete Aufnahmeöffnung (19) bei in das Basisteil (11) eingestecktem Einsteckteil (16) in der ersten Einsteckposition einen anderen Abstand zum Fuß des Stehbolzenschaftes (30) aufweist als in der zweiten Einsteckposition.

2. Rundstangenführung nach Anspruch 1, **dadurch gekennzeichnet, dass** das erste topfförmige Basisteil (11) an seinem oberen Rand (37) wenigstens zwei einander gegenüberliegende fensterartige Ausschnitte (36) zur in der ersten Einsteckposition formschlüssigen Aufnahme jeweils eines an dem zweiten Einsteckteil (16) ausgebildeten vorstehenden Absatzes (20) aufweist, wobei in der um einen Winkel von 90 Grad zur ersten Einsteckposition verdrehten zweiten Einsteckposition die an dem zweiten Einsteckteil (16) ausgebildeten Absätze (20) auf dem oberen Rand (37) des ersten topfförmigen Basisteils (11) aufsitzen.

3. Rundstangenführung nach Anspruch 2, **dadurch gekennzeichnet, dass** im Innenraum (12) des topfförmigen Basisteils (11) nach innen einspringende und formschlüssig mit auf dem äußeren Umfang des Einsteckteils (16) ausgebildeten Ausnehmungen (21, 22) als Verdrehsicherung zusammenwirkende Führungsleisten (13, 14) angeordnet sind.

4. Rundstangenführung nach einem der Ansprüche 1 bis 3, **dadurch gekennzeichnet, dass** in dem Einsteckteil (16) zwei einander gegenüberliegende und in axialer Richtung des vom Boden des Einsteckteils (16) ausgehenden Kanals (35) versetzt zueinander angeordnete halbkreisförmige Wandungsbereiche (23, 25) der den Kanal (35) umschließenden Wandung mit an ein an dem Stehbolzenschaft (30) ausgebildetes Außengewinde (31) angepassten Innengewindegängen (24) versehen sind, wobei ein erster mit Innengewinde (24) versehener unterer Wandungsbereich (25) an die Bodenfläche anschließt und der diesem unteren Wandungsbereich (25) gegenüberliegende Wandungsbereich (26) des Kanals (35) mit einer mit einem Neigungswinkel gegen die Längsachse des Kanals (35) angeordneten Freimachung versehen ist derart, dass eine im Boden des Einsteckteils (16) ausgebildete Öffnung (27) zur Aufnahme des Stehbolzenschaftes (30) schlitzförmig ausgebildet ist und ein Aufstecken der Rundstangenführung (10) auf den Stehbolzenschaft (30) in einer um den Neigungswinkel der Freimachung verkippten Stellung ermöglicht.

5. Rundstangenführung nach einem der Ansprüche 1 bis 4, **dadurch gekennzeichnet, dass** das topfförmige Basisteil (11) auf seinem äußeren Umfang mit einer Riffelung (15) versehen ist.

## Claims

1. Round rod guide (10) for mounting on a stud bolt attached to a container side, with a plastic body, which is being plugable onto and attachable to a stud bolt shaft (30) of the stud bolt, wherein the plastic body has in its interior a channel (35) for receiving the stud bolt shaft (30) and on its free end a receiving opening (19) for insertion of a round rod, **characterized in that** the plastic body is formed as two parts with a first, cup-shaped base part (11) and with a second, insertion part (16) which insertable into the cup-shaped base part (11) in at least two different insertion positions that are rotated relative to one another at a predetermined angle, and wherein the receiving opening (19) for the round rod and the channel (35) for receiving the stud bolt shaft (30) and for attaching the round rod guide (10) are formed on the insertion part (16), whereby the receiving opening (10) formed in the insertion part (16), when the insertion part (16) is inserted in the base part (11) in the first insertion position, has a different spacing to the foot of the stud bolt shaft (30) than when in the second insertion position.

2. Round rod guide according to claim 1, **characterized in that** the first cup-shaped base part (11) has at least two oppositely disposed window-like cutouts (36) on its upper edge (37) for form-locking receipt in the first insertion position, respectively, of projecting portions (20) formed on the second insertion part (16), wherein in the second insertion position rotated at an angle of 90° relative to the first insertion position, the portions (20) formed on the second insertion part (16) rest on the upper edge (37) of the first cup-shaped base part (11).

3. Round rod guide according to claim 2, **characterized in that** in the interior (12) of the cup-shaped base part (100), inwardly projecting guide rails (14, 15) are formed that cooperate in a form-locking manner with recesses (21, 22) formed on the outer periphery of the insertion part (16) as an anti-rotation device.

4. Round rod guide according to one of claims 1 through 3, **characterized in that** two oppositely disposed semicircular wall regions (23, 25) of the wall surrounding the channel (35), which are offset to one another in the axial direction of the channel (35) originating from the floor of the insertion part, are provided in the insertion part (16), the wall regions having an inner thread (24) adapted to an outer thread (31) formed on the stud bolt shaft (30), whereby a first lower wall region (25) connects to a floor surface, and the wall region (26) of the channel (35) that is opposite to this lower wall region (25) is provided with a clearance that is arranged at an angle of inclination relative to the longitudinal axis of the channel (35), such that an opening formed in the floor of the insertion part (16) is formed as a slot for receiving the stud bolt shaft (30) and enables insertion of the round rod guide (10) onto the stud bolt shaft (30)
in a position that is tipped relative to the angle of inclination of the clearance.

5. Round rod guide according to one of claims 1 through 4, **characterized in that** the cup-shaped base part (11) is provided on its outer periphery with a ribbing (15).

## Revendications

1. Guidage de barre ronde (10) destiné à être monté sur un boulon d'entretoisement du côté d'un récipient avec un corps en matière plastique susceptible d'être emboîté sur la tige (30) de boulon d'entretoisement de ce dernier et à être immobilisé sur celle-ci qui comporte en son intérieur un canal (35) destiné à recevoir la tige (30) de boulon d'entretoisement et sur son extrémité libre un orifice de logement (19) pour y faire passer une barre ronde, **caractérisé en ce que** le corps en matière plastique est conçu en deux parties avec une première partie de base (11) en forme de pot et avec une deuxième partie à enficher (16) susceptible d'être enfichée dans au moins deux différentes positions d'enfichage, chaque fois tournées de la valeur d'un angle prédéfini l'une par rapport à l'autre dans la partie de base (11) en forme de pot et **en ce que** sur la partie à enficher (16) est conçue aussi bien l'orifice de logement (19) pour la barre ronde qu'également le canal (35) destiné à recevoir la tige (30) de boulon d'entretoisement et à immobiliser le guidage de barre ronde (10), lorsque la partie à enficher (16) est enfichée dans la partie de base (11), l'orifice de logement (19) conçu dans la partie à enficher (16) présentant dans la première position d'enfichage un autre écart par rapport au pied de la tige (30) du boulon d'entretoisement que dans la deuxième position d'enfichage.

2. Guidage de barre ronde selon la revendication 1, **caractérisé en ce que** sur son bord supérieur (37), la première partie de base (11) en forme de pot comporte au moins deux découpes (36) en forme de fenêtres mutuellement opposées pour le logement par complémentarité de forme dans la première position d'enfichage de chaque fois un talon (20) saillant conçu sur la deuxième partie à enficher (16), dans la deuxième position d'enfichage tournée de la valeur d'un angle de 90 degrés par rapport à la première position d'enfichage, les talons (20) conçus sur la deuxième partie à enficher (16) reposant sur le bord supérieur (37) de la première partie de base (11) en forme de pot.

3. Guidage de barre ronde selon la revendication 2, **caractérisé en ce que** dans l'espace intérieur (12) de la partie de base (11) en forme de pot sont placés des évidements (21, 22) rentrant vers l'intérieur et conçus par complémentarité de forme avec la périphérie extérieure de la partie à enficher (16), pour bloquer la rotation de baguettes de guidage (13, 14) coopérantes.

4. Guidage de barre ronde selon l'une quelconque des revendications 1 à 3, **caractérisé en ce que** dans la partie à enficher (16), deux zones de paroi (23, 25) mutuellement opposées en forme de demi-cercles et placées avec un déport mutuel dans la direction axiale du canal (35) partant du fond de 1a partie à enficher (16) de la paroi entourant le canal (35) sont munis de pas de taraudage (24) adaptés à un filetage (31) conçu sur la tige (30) du boulon d'entretoisement, une première zone (25) de paroi inférieure, munie d'un taraudage (24) se raccordant sur la surface du fond et la zone de paroi (26) opposée à ladite zone de paroi (25) inférieure du canal (35) étant munie d'un dégagement placé avec un angle d'inclinaison contre l'axe longitudinal du canal (35), de telle sorte qu'un orifice (27) conçu dans le fond de la partie à enficher (16), destiné à recevoir la tige (30) du boulon d'entretoisement soit conçu en forme d'encoche et permette un emboîtement du guidage de barre ronde (10) sur la tige (30) du boulon d'entretoisement (30) dans une position basculée de la valeur de l'angle d'inclinaison du dégagement.

5. Guidage de barre ronde selon l'une quelconque des revendications 1 à 4, **caractérisé en ce que** sur sa périphérie extérieure, la partie de base (11) en forme de pot est munie d'une cannelure (15).
